# EUROPEAN PATENT SPECIFICATION

(11) **EP 1 747 697 B1**
(45) Date of publication and mention of the grant of the patent: **27.07.2011**
(21) Application number: 05734005.1
(22) Date of filing: 06.05.2005
(51) Int. Cl.: H04W 36/00

(54) **COMMUNICATION SYSTEM, STATIONS FOR USE THEREIN, AND METHOD OF OPERATING A COMMUNICATION SYSTEM**
KOMMUNIKATIONSSYSTEM, NUTZUNGSSTATIONEN DARIN UND VERFAHREN ZUM BETRIEB EINES KOMMUNIKATIONSSYSTEMS
SYSTEME DE COMMUNICATION, STATIONS UTILISEES DANS CELUI-CI, ET PROCEDE POUR FAIRE FONCTIONNER UN SYSTEME DE COMMUNICATION

(30) Priority: 07.05.2004 GB 0410210; 15.06.2004 GB 0413307
(43) Date of publication of application: 31.01.2007
(73) Proprietor: ST-Ericsson SA, 1228 Plan-les-Ouates (CH)
(72) Inventor: BAKER, Matthew, P., J., Redhill, Surrey RH1 5HA (GB); MOULSLEY, Timothy, J., Redhill, Surrey RH1 5HA (GB); BUCKNELL, Paul, Redhill, Surrey RH1 5HA (GB)
(74) Representative: Gray, Peter John Bracey
(86) International application number: PCT/IB2005/051484
(87) International publication number: WO 2005/109942

(56) References cited:
- EP-A- 0 929 203
- EP-A- 1 333 696
- WO-A-02/03733
- US-B1- 6 731 907

## Description

The invention relates to a communication system, to stations for use in a communication system, and to methods of operating the system and stations. The invention has particular application in mobile communications, for example in the transmission of data from a mobile station to a fixed node during soft handover between a plurality of base stations.

It is known for cellular mobile communication systems to use soft handover in which a mobile station communicates with base stations in more than one cell. This may occur, for example, when transferring from one cell to another, in which case soft handover can minimise any disruption to ongoing communications. Data transmitted by the mobile station can be routed to a destination via any of those base stations.

It is known for a base station to be equipped to operate any of a plurality of transmission formats, and for the transmission format to be used for a particular transmission to be negotiated between a base station and mobile station. A transmission format comprises one or more parameters relating to a transmitted signal, such as modulation scheme, bit rate, coding, and interleaving depth.

EP 0929203 A2 discloses a method for providing information related to the selection of cells to a terminal of a cellular radio system, which comprises base stations with cells and terminals and in which a certain first base station supports only a certain first modulation method and a certain second base station supports both the first modulation method and at least one other modulation method. The method comprises a step in which the terminal is notified of which modulation methods are supported by those base stations the cells of which are possible new cells of the terminal.

It is desirable to be able to select a transmission format for use during soft handover.

It is an object of the invention to enable the selection of a transmission format for use during soft handover.

According to a first aspect of the invention there is provided a method of operating a communication system comprising a first station and a plurality of second stations, the method comprising:
at each second station, transmitting a first indication of one or more transmission formats currently available for reception by the respective second station;
at the first station receiving the first indications, using the first indications to select a transmission format, where the selection is made from those transmission formats that are available to all second stations and those available to only a sub-set of the second stations and transmitting data using the selected transmission format; and receiving the data at one or more of the second stations;
   characterised by
at one or more of the second stations, transmitting a second indication of a transmission format to be vetoed; and
at the first station, receiving the second indication(s) and using the second indication(s) to exclude each vetoed transmission format during the selection of the transmission format.

According to a second aspect of the invention there is provided a first station for use in a communication system comprising a plurality of second stations, the first station comprising:
means for receiving from each of a plurality of second stations a first indication of one or more transmission formats currently available for reception by the respective second station;
means for using the first indications to select a transmission format, where the selection is made from those transmission formats that are available to all second stations and those available to only a sub-set of the second stations; and
means for transmitting data using the selected transmission format; characterised by
means for receiving from one or more of the second stations a second indication of a transmission format to be vetoed; and
means for using the second indication(s) to exclude each vetoed transmission format during the selection of a transmission format.

According to a third aspect of the invention there is provided a second station for use in a communication system comprising a first station and a plurality of second stations, the second station comprising:
means for transmitting a first indication of one or more transmission formats currently available for reception by the second station; and
means for receiving data transmitted by a first station;
characterised by means for transmitting a second indication of a transmission format to be vetoed.

According to a fourth aspect of the invention there is provided a communication system comprising a first station according to the second aspect of the invention and a plurality of second stations according to the third aspect of the invention.

By indicating which transmission formats are currently available for reception, the second station provides information to enable the first station to select a format that at least one second station has available to it. The term "available for reception" means that the second station is equipped to receive data using the indicated transmission format and that the reception quality using that transmission format is assessed to be adequate, according to a criterion, for receiving the data. Parameters that may be used alone or in combination for assessing reception quality are, for example, signal level, bit error rate, block error rate, signal-to-interference ratio, signal-to-noise ratio, delay, loading, buffer occupancy, the value of received power control commands and current transmit power. Other parameters may be used.

By indicating a transmission format which is to be vetoed, the second station is able to indicate those transmission formats that, if used by other of the second stations, are assessed to generate unacceptable interference according to a criterion. The parameters that may be used for assessing the acceptability of interference are the same as those listed above for assessing reception quality.

By selecting a transmission format from those transmission formats that are available to all second stations and those available to only a sub-set of the second stations, and excluding each vetoed transmission format, the number of transmission formats available for selection is maximised, which has the advantage that a transmission format may be selected that enables higher efficiency, for example a higher data rate or a higher signal quality.

In one embodiment second stations receiving the transmitted data in the selected format, despite indicating that the selected format was not available, may transmit an acknowledgement. The acknowledgement may be a positive or a negative acknowledgement. Such a situation can arise, for example, if reception conditions improve before the data is transmitted. This embodiment has the advantage that the number of second stations at which the transmitted data may be received is maximised, thereby increasing efficiency. In this embodiment the first station is adapted to receive an acknowledgement from a second station that indicated the selected transmission format as available and from a second station that did not indicate the selected transmission format as available.

In a variation of the above embodiment, an acknowledgement transmitted by second stations in response to receiving data using a transmission format that it indicated as not available is restricted to a positive acknowledgement.

The invention will now be described, by way of example only, with reference to the accompanying drawings wherein;
Figure 1 is a block schematic diagram of a communication system;
Figure 2 is a flow chart of a method of communicating data packets;

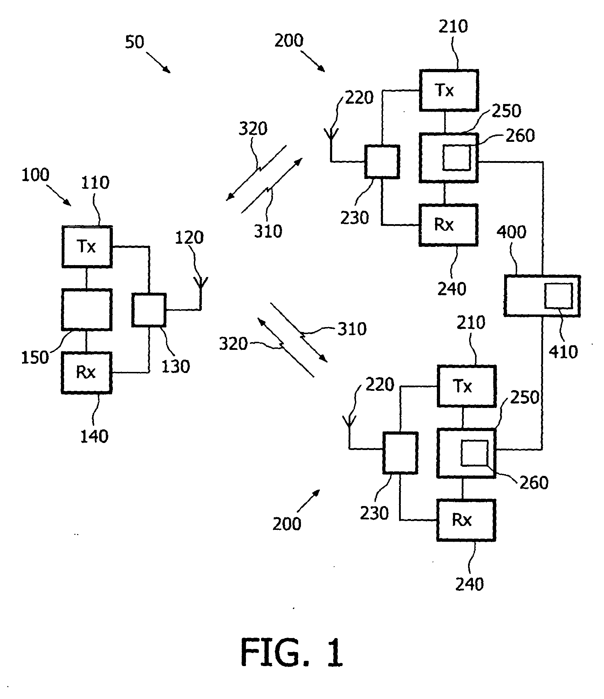

Referring to Figure 1, there is illustrated a radio communication system 50 comprising a first station 100, and a plurality of second stations 200 coupled to a destination node apparatus 400. The first station 100 may be, for example, a mobile communications equipment and the second stations 200 may be base stations in a mobile communications network. The term "node apparatus" is used to refer to any apparatus coupled to each of the plurality of second stations 200 to which data is to be routed.

The first station 100 comprises a transmitter 110 for transmitting data on an uplink 310. The transmitter 110 has an output coupled to an antenna 120 via coupling means 130 which may be, for example, a circulator or changeover switch. The coupling means 130 is also coupled to an input of a receiver 140 for receiving downlink 320 signals from the antenna 120. Coupled to the transmitter 110 and the receiver 140 is a control means 150, for example a processor, for processing signals received from the second stations 200.

The second stations 200 each comprise a receiver 240 for receiving data transmitted by the first station 100 on the uplink 310. The receiver 240 has an input coupled to an antenna 220 via coupling means 230 which may be, for example, a circulator or changeover switch. The coupling means 230 is also coupled to an output of a transmitter 210 for transmitting downlink signals via the antenna 220. Coupled to the transmitter 210 and the receiver 240 is a control means 250, for example a processor, for processing data signals received from the first station 100. The control means 250 includes storage means 260.

The node apparatus 400 comprises a receiver 410 for receiving data forwarded by the second stations 200. It also comprises additional elements for acting on received data, such as means for storing, forwarding or processing. These are not shown in Figure 1 as they are not material to the invention.

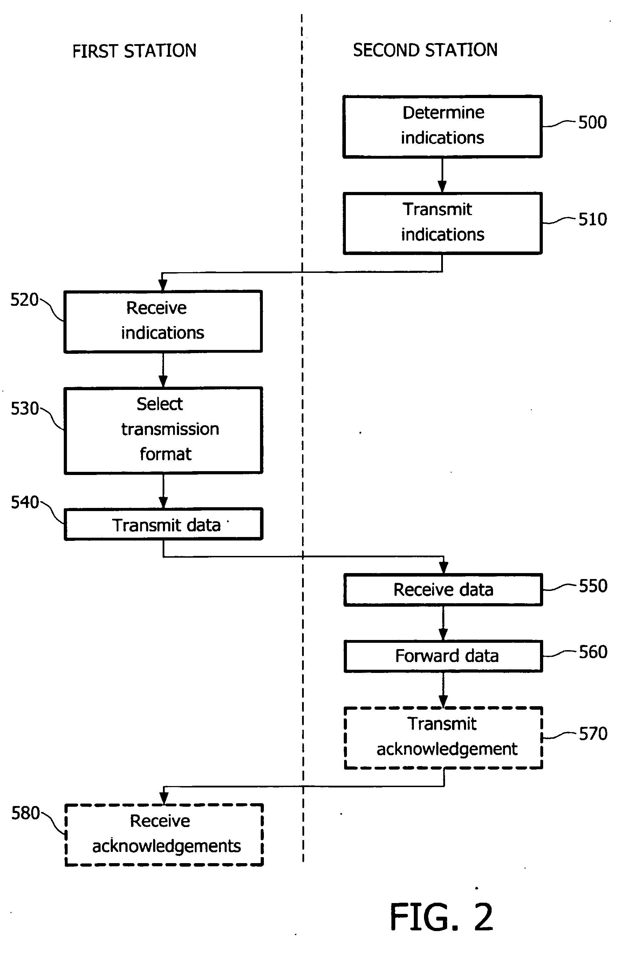

The operation of the radio communication system 50 will now be described with reference to the flow chart of Figure 2. In Figure 2, steps on the left hand side of the flow chart relate to steps performed by the first station 100, and the steps on the right hand side relate to steps performed by each of the second stations 200. Steps shown in blocks having a broken line are optional steps.

At step 500, the control means 250 of each second station 200 determines which transmission formats are currently available to the second station 200 for reception of data. A list of such formats may be predetermined or determined dynamically using assessment parameters as described above, and stored in the storage means 260. Also at step 500 the control means 250 of each second station 200 determines any transmission formats that, if used by other of the second stations, are assessed to generate unacceptable interference. Possible parameters for this assessment are described above. These latter transmission formats are those to be vetoed, and a list of these formats may be stored in the storage means 260. The formats that a second station 200 selects to be vetoed may be a subset of the formats which are not currently available to the respective second station 200 for reception of data.

At step 510, each second station transmits via the transmitter 210 a first indication of one or more transmission formats currently available for reception of data by the respective second station, and a second indication of any transmission format to be vetoed, if any.

At step 520, the first station 100 receives the indications from each of the second stations 200 via its receiver 140.

At step 530, the control means 150 uses the received first and second indications to select a transmission format. The selection is made from those transmission formats that are available to all second stations 200 and those available to only a sub-set of the second stations 200, and excludes each vetoed transmission format.

At step 540, the first station 100 transmits, via the transmitter 110, data using the selected transmission format.

At step 550, the data is received at one or more of the second stations 200.

At step 560, the received data is forwarded to a destination by one or more of the second stations 200 that received the data. In Figure 1 the destination is the node apparatus 400.

At optional step 570, the second stations 200 that received the data and forwarded the data to the node apparatus 400 transmit an acknowledgement. The acknowledgement may be either a positive acknowledgement, indicating successful receipt of the data, or a negative acknowledgement indicating unsuccessful receipt of the data. Optionally, second stations 200 receiving the transmitted data in the selected format, despite indicating that the selected format was not available, may transmit an acknowledgement; in a further option, transmission of such an acknowledgement may be limited to only positive acknowledgements.

At optional step 580 the first station 100 receives the acknowledgements via receiver 140. The receiver 140 may optionally be adapted to receive the acknowledgements both from those second stations that indicated the selected transmission format as available and also from those second stations that did not indicate the selected transmission format as available. For example, if the receiver 140 is a receiver for code division multiple access (CDMA) acknowledgement signals, the receiver may be adapted to correlate for the codes used by all of the second stations 200, not merely the codes used by those second stations 200 that indicated the selected transmission format as available.

After step 580 the first station 100 may decide whether or not to retransmit the data, according to whether it received a positive acknowledgement.

In the present specification and claims the word "a" or "an" preceding an element does not exclude the presence of a plurality of such elements. Further, the word "comprising" does not exclude the presence of other elements or steps than those listed.

The inclusion of reference signs in parentheses in the claims is intended to aid understanding and is not intended to be limiting.

From reading the present disclosure, other modifications will be apparent to persons skilled in the art. Such modifications may involve other features which are already known in the art of communication systems, apparatus and operating methods and which may be used instead of or in addition to features already described herein.

## Claims

1. A method of operating a communication system (50) comprising a first station (100) and a plurality of second stations (200), the method comprising:
at each second station (200), transmitting a first indication of one or more transmission formats currently available for reception by the respective second station (200);
at the first station (100) receiving the first indications, using the first indications to select a transmission format, where the selection is made from those transmission formats that are available to all second stations (200) and those available to only a sub-set of the second stations (200), and transmitting data using the selected transmission format; and
receiving the data at one or more of the second stations (200);
**characterised by**
at one or more of the second stations (200), transmitting a second indication of a transmission format to be vetoed; and
at the first station (100), receiving the second indication(s) and using the second indication(s) to exclude each vetoed transmission format during the selection of the transmission format.

2. A method as claimed in claim 1, further comprising at at least one second station which indicated the selected transmission format as available and at at least one second station which did not indicate the selected transmission format as available (200), transmitting an acknowledgement in response to receiving the transmitted data, and at the first station (100), receiving the acknowledgements from those second stations (200) that indicated the selected transmission format as available and those second stations (200) that did not indicate the selected transmission format as available.

3. A first station (100) for use in a communication system (50) comprising a plurality of second stations (200), the first station comprising:
means (140) for receiving from each of a plurality of second stations (200) a first indication of one or more transmission formats currently available for reception by the respective second station (200);
means (150) for using the first indications to select a transmission format, where the selection is made from those transmission formats that are available to all second stations (200) and those available to only a sub-set of the second stations (200); and
means (110) for transmitting data using the selected transmission format;
**characterised by**
means (140) for receiving from one or more of the second stations a second indication of a transmission format to be vetoed; and
means (150) for using the second indication(s) to exclude each vetoed transmission format during the selection of a transmission format

4. A second station (200) for use in a communication system (50) comprising a first station (100) and a plurality of second stations (200), the second station (200) comprising:
means (210) adapted to transmit a first indication of one or more transmission formats currently available for reception by the second station (200); and
means (240) for receiving data transmitted by a first station (100);
**characterised by** means (210) adapted to transmit a second indication of a transmission format to be vetoed.

5. A second station (200) as claimed in claim 4, wherein the means (240) for receiving is adapted to receive the data transmitted by the first station (100) in a format which is not currently indicated as being available for reception by the second station (200).

6. A communication system (50) comprising a first station (100) as claimed in claim 3, and a plurality of second stations (200) as claimed in claim 4.

## Patentansprüche

1. Verfahren zum Betreiben eines Kommunikationssystems (50), umfassend eine erste Station (100) und mehrere zweite Stationen (200), wobei das Verfahren Folgendes umfasst:
an jeder zweiten Station (200) Übertragen einer ersten Angabe eines oder mehrerer Übertragungsformate, die gegenwärtig für den Empfang durch die jeweilige zweite Station (200) verfügbar sind;
an der ersten Station (100) Empfangen der ersten Angaben, Verwendung der ersten Angaben zum Auswählen eines Übertragungsformats, wobei die Auswahl aus denjenigen Übertragungsformaten erfolgt, die für alle zweiten Stationen (200) verfügbar sind, und denjenigen, die nur für eine Teilmenge der zweiten Stationen (200) verfügbar sind, und Übertragen von Daten unter Verwendung des ausgewählten Übertragungsformats; und Empfangen der Daten an einer oder mehreren der zweiten Stationen (200);
**gekennzeichnet durch**
an einer oder mehreren der zweiten Stationen (200) Übertragen einer zweiten Angabe eines Übertragungsformats, dem zu widersprechen ist; und
an der ersten Station (100) Empfangen der zweiten Angabe(n) und Verwenden der zweiten Angabe(n) zum Ausschließen jedes widersprochenen Übertragungsformats während der Auswahl des Übertragungsformats.

2. Verfahren nach Anspruch 1, weiter umfassend an mindestens einer zweiten Station, die das ausgewählte Übertragungsformat als verfügbar angab, und an mindestens einer zweiten Station, die das ausgewählte Übertragungsformat nicht als verfügbar angab (200), Übertragen einer Bestätigung als Reaktion auf den Empfang der übertragenen Daten und an der ersten Station (100) Empfangen der Bestätigungen von denjenigen zweiten Stationen (200), die das ausgewählte Übertragungsformat als verfügbar angaben, und denjenigen zweiten Stationen (200), die das ausgewählte Übertragungsformat nicht als verfügbar angaben.

3. Erste Station (100) zur Verwendung in einem Kommunikationssystem (50), das mehrere zweite Stationen (200) umfasst, wobei die erste Station Folgendes umfasst:
Mittel (140) zum Empfangen, von jeder von mehreren zweiten Stationen (200), einer ersten Angabe eines oder mehrerer Übertragungsformate, die gegenwärtig für den Empfang durch die jeweilige zweite Station (200) verfügbar sind;
Mittel (150) zum Verwenden der ersten Angaben zum Auswählen eines Übertragungsformats, wobei die Auswahl aus denjenigen Übertragungsformaten erfolgt, die für alle zweiten Stationen (200) verfügbar sind, und denjenigen, die nur für eine Teilmenge der zweiten Stationen (200) verfügbar sind; und
Mittel (110) zum Übertragen von Daten unter Verwendung des ausgewählten Übertragungsformats;
**gekennzeichnet durch**
Mittel (140) zum Empfangen, von einer oder mehreren der zweiten Stationen, einer zweiten Angabe eines Übertragungsformats, dem zu widersprechen ist; und
Mittel (150) zum Verwenden der zweiten Angabe(n) zum Ausschließen jedes widersprochenen Übertragungsformats während der Auswahl eines Übertragungsformats.

4. Zweite Station (200) zur Verwendung in einem Kommunikationssystem (50), das eine erste Station (100) und mehrere zweite Stationen (200) umfasst, wobei die zweite Station (200) Folgendes umfasst:
Mittel (210), die ausgelegt sind zum Übertragen einer ersten Angabe eines oder mehrerer Übertragungsformate, die gegenwärtig für den Empfang durch die zweite Station (200) verfügbar sind; und
Mittel (240) zum Empfangen von Daten, die von einer ersten Station (100) übertragen werden;
**gekennzeichnet durch** Mittel (210), die ausgelegt sind zum Übertragen einer zweiten Angabe eines Übertragungsformats, dem zu widersprechen ist.

5. Zweite Station (200) nach Anspruch 4, wobei das Mittel (240) zum Empfangen ausgelegt ist zum Empfangen der Daten, die von der ersten Station (100) in einem Format übertragen werden, das gegenwärtig nicht als für den Empfang durch die zweite Station (200) verfügbar angegeben ist.

6. Kommunikationssystem (50), umfassend eine erste Station (100) nach Anspruch 3 und mehrere zweite Stationen (200) nach Anspruch 4.

## Revendications

1. Procédé pour faire fonctionner un système de communication (50) comprenant une première station (100) et une pluralité de secondes stations (200), le procédé comprenant les étapes suivantes :
à chaque seconde station (200), la transmission d'une première indication d'un ou de plusieurs formats de transmission actuellement disponible(s) pour une réception par la seconde station respective (200);
à la première station (100) la réception des premières indications et l'utilisation des premières indications pour sélectionner un format de transmission, la sélection étant faite parmi les formats de transmission qui sont disponibles pour toutes les secondes stations (200) et ceux qui sont disponibles uniquement pour un sous-ensemble des secondes stations (200) et la transmission des données en utilisant le format de transmission sélectionné ; et la réception des données par une ou de plusieurs des secondes stations (200) ;
**caractérisé par**
à une ou plusieurs des secondes stations (200), la transmission d'une seconde indication d'un format de transmission à rejeter ; et
à la première station (100), la réception de la/des seconde(s) indication(s) et l'utilisation de la/des seconde(s) indication(s) pour exclure chaque format de transmission rejeté durant la sélection du format de transmission.

2. Procédé selon la revendication 1, comprenant en outre, à au moins une seconde station qui a indiqué le format de transmission sélectionné comme étant disponible et au moins une seconde station qui n'a pas indiqué le format de transmission sélectionné comme étant disponible (200), la transmission d'un accusé réception en réponse à la réception des données transmises et, à la première station (100), la réception des accusés réception des secondes stations (200) qui ont indiqué le format de transmission sélectionné comme étant disponible et des secondes stations (200) qui n'ont pas indiqué le format de transmission sélectionné comme étant disponible.

3. Première station (100) destinée à être utilisée dans un système de communication (50) comprenant une pluralité de secondes stations (200), la première station comprenant :
des moyens (140) de réception de chacune d'une pluralité de secondes stations (200) d'une première indication d'un ou de plusieurs formats de transmission actuellement disponible(s) pour une réception par la seconde station respective (200) ;
des moyens (150) d'utilisation des premières indications pour sélectionner un format de transmission, la sélection étant faite parmi les formats de transmission qui sont disponibles pour toutes les secondes stations (200) et qui sont disponibles uniquement pour un sous-ensembles des secondes stations (200) ; et
des moyens (110) de transmission de données en utilisant le format de transmission sélectionné ;
**caractérisé par**
des moyens (140) de réception depuis une ou plusieurs des secondes stations d'une indication d'un format de transmission à rejeter ; et
des moyens (150) d'utilisation de la/des seconde(s) indication(s) pour exclure chaque format de transmission rejeté durant la sélection d'un format de transmission.

4. Seconde station (200) destinée à être utilisée dans un système de communication (50) comprenant une première station (100) et une pluralité de secondes stations (200), la seconde station (200) comprenant :
des moyens (210) adaptés à transmettre une première indication d'un ou de plusieurs formats de transmission actuellement disponibles pour une réception par la seconde station (200) ; et
des moyens (240) de réception des données transmises par une première station (100) ;
**caractérisés par** des moyens (210) adaptés à transmettre une seconde indication d'un format de transmission à rejeter.

5. Seconde station (200) selon la revendication 4, dans laquelle les moyens (240) de réception sont adaptés pour recevoir les données transmises par la première station (100) dans un format qui n'est pas actuellement indiqué comme étant disponible pour une réception par la seconde station (200).

6. Système de communication (50) comprenant une première station (100) selon la revendication 3 et une pluralité de secondes stations (200) selon la revendication 4.
